(19) Europäisches Patentamt

European Patent Office

Office européen des brevets

(11) **EP 1 435 726 A1**

## (12) EUROPEAN PATENT APPLICATION
published in accordance with Art. 158(3) EPC

(43) Date of publication:
**07.07.2004 Bulletin 2004/28**

(51) Int Cl.[7]: **H04N 1/04**, G06T 1/60

(21) Application number: **02775314.4**

(22) Date of filing: **10.10.2002**

(86) International application number:
**PCT/JP2002/010521**

(87) International publication number:
**WO 2003/034707 (24.04.2003 Gazette 2003/17)**

(84) Designated Contracting States:
**DE FR GB**

(30) Priority: **10.10.2001  JP 2001312159**

(71) Applicant: **PFU LIMITED**
**Kahoku-gun Ishikawa 929-1192 (JP)**

(72) Inventors:
• **KOBAKO, Masahiko**
  **Kahoku-gun, Ishikawa 929-1192 (JP)**
• **UMI, Kazuaki**
  **Kahoku-gun, Ishikawa 929-1192 (JP)**
• **KOSAKA, Kiyoto**
  **Kahoku-gun, Ishikawa 929-1192 (JP)**

(74) Representative: **Reichel, Wolfgang, Dipl.-Ing. et al**
**Reichel und Reichel**
**Parkstrasse 13**
**60322 Frankfurt (DE)**

(54) **SCANNER APPARATUS AND HOST APPARATUS CONNECTED TO THE SCANNER APPARATUS**

(57)     A scanning device reads image data, stores the image data in a unit of raster in a buffer and transferring the image data to a host computer. The scanning device has a stop unit to temporarily stop reading the image data when an empty capacity of the buffer becomes smaller than a predetermined amount, a write unit to write specified mark data in a next storage line of raster image data lastly read and stored in the buffer in response to a temporary stop, and a restart unit to restart reading the image data by overlapping the raster image data lastly read when the empty capacity of the buffer becomes larger than the predetermined amount.

FIG. 2

**Description**

Technical Field

This invention relates to a scanning device and a host computer connected to the scanning device, and more particularly to a scanning device for reading image data, storing data in a unit of raster into a buffer and transferring data to a host computer, in which image data is read at high accuracy with a simple structure even when a reading operation is stopped temporarily in terms of a buffer capacity, and a host computer connected to the scanning device.

Background Art

The scanning device comprises an interface buffer (memory) for temporarily storing read image data and transmits the read image data to the host apparatus (host computer). In this case, because control is passed to another job having higher priority to be expanded in the host computer, the image data is received with a time lag by the host computer so that an empty area of the interface buffer is possibly reduced.

Thus, the scanning device performs a start/stop operation. That is, the scanning device stops temporarily reading the image data, if the capacity of interface buffer falls below a predetermined amount, and restarts reading the image data, if the empty area of interface buffer is restored to the predetermined amount or more owing to its temporary stop. When this start/stop operation is performed, it is required to concatenate the image data.

Conventionally, the scanning device performs the following processing to concatenate the image data. That is, it is recorded to which raster position the image data is read and stored in the interface buffer before the stop operation is performed. And if the restart operation for reading is entered, a carrier (an optical unit mounting a read head) is returned by a specified amount, and is set at a constant speed by through up, whereby reading the image data is restarted. If the recorded raster position is reached, the raster image data is stored in the interface buffer from the next position. Thereby, a concatenation of the image data required at the time of the start/stop operation is performed. Though not described above, when the stop operation for reading is entered, the carrier is stopped by through down.

However, since the carrier is moved by employing a gear or a belt, when the start/stop operation is performed, a certain amount of backlash inevitably occurs in through up after returning the carrier by a specified amount. Moreover, hunting (vibration) by through up also inevitably occurs. Therefore, the conventional scanning device has a problem that the image data cannot be concatenated at high accuracy.

In order to solve this problem, it is necessary to move the carrier employing a feed mechanism of high precision with a quite small amount of backlash. However, there is an associated problem that the scanning device cost is increased impractically.

The present invention has been achieved in the light of the above-mentioned problems, and it is an object of the present invention to provide a scanning device that can read the image data at high accuracy with a simple structure even when the reading operation is temporarily stopped in terms of buffer capacity.

Also, it is another object of the present invention to provide a host computer connected to the scanning device that can read the image data at high accuracy with a simple structure even when the reading operation is temporarily stopped in terms of buffer capacity.

Disclosure of Invention

The present invention provides a scanning device for reading image data, storing the image data in a unit of raster in a buffer and transferring the image data to a host computer. The scanning device has means for temporarily stopping reading the image data when an empty capacity of the buffer is smaller than a predetermined amount, means for writing the specified mark data in a next storage line of the raster image data lastly read and stored in the buffer in response to the temporary stop, and means for restarting reading the image data by overlapping the raster image data lastly read when the empty capacity of the buffer is larger than the predetermined amount.

Also, the present invention provides a host computer connected to the scanning device for acquiring the image data read by the scanning device in a unit of raster. The host computer has means for determining whether or not the acquired raster image data is specified mark data indicating a temporary stop of reading the image data, means for detecting the raster image data most similar to the raster image data immediately before the mark data for a detection object of the raster image data having a predetermined number of rasters following the mark data within the acquired image data, and means for concatenating the image data read before the temporary stop and the image data read after the temporary stop on the basis of the detected raster image data and the raster image data immediately before the mark data.

In the present invention as configured above, the mark data is employed. That is, when the empty capacity of the buffer becomes smaller than the predetermined amount, reading the image data is temporarily stopped, and the specified mark data is written in the next storage line of the raster image data lastly read and stored in the buffer. And when the empty capacity of the buffer becomes larger than the predetermined amount owing to the temporary stop, reading the image data is restarted by overlapping the raster image data lastly read.

On the other hand, the host computer acquires the image data stored in this buffer, and, detects the raster image data most similar to the raster image data immediately before the mark data for a detection object of the raster image data having a predetermined number of rasters following the mark data within the acquired image data, if the mark data is detected in the acquired image data. And the host computer concatenates the image data read before the temporary stop and the image data read after the temporary stop on the basis of the detected raster image data and the raster image data immediately before the mark data.

In this manner, with the present invention, in performing the start/stop operation for reading the image data in accordance with the capacity of buffer, the scanning device restarts reading the image data by overlapping the raster image data lastly read at the time of temporary stop, while the host computer designates the raster image data lastly read at the time of temporary stop employing the mark data recorded by the scanning device, detects the raster image data matched with the raster image data lastly read, and concatenates the image data before temporary stop and the image data after temporary stop, whereby the image data can be read at high accuracy with a simple structure.

Preferably, the host computer of the present invention further has means for determining whether or not the neighborhood of the raster image data immediately before the mark data is the uniform image data. And, the raster image data is concatenated without detection, when the neighborhood of the raster image data immediately before the mark data is the uniform image data. Thereby, the processing load can be relieved when there is no need for concatenating the image data fully.

Also, preferably, the host computer of the present invention further has means for calculating a weighted average of the raster image data to be concatenated, the raster image data to concatenate and the following raster image data having a predetermined number of rasters in accordance with a separation degree of raster, and for rewriting the raster image data to concatenate and the following raster image data of the predetermined number of rasters on the basis of its calculation result. Thereby, the image data can be smoothly concatenated by using the signal processing.

The present invention provides a scanning device for reading image data, storing the image data in a unit of raster and transferring the image data to a host computer. The scanning device has means for temporarily stopping reading the image data when an empty capacity of the buffer is smaller than a predetermined amount, means for notifying the host computer of the information capable of designating the raster position of the raster image data lastly read and stored in the buffer in response to the temporary stop, and means for restarting reading the image data by overlapping the raster image data lastly read when the empty capacity of the buffer is larger than the predetermined amount.

On the other hand, the present invention provides a host computer connected to a scanning device for acquiring the image data read by the scanning device in a unit of raster. The host computer has means for acquiring the raster position information indicating a temporary stop position of reading the image data from the scanning device, means for designating the raster image data lastly read at the time of the temporary stop indicated by the raster position information from the acquired image data, means for detecting the raster image data most similar to the raster image data lastly read for a detection object of the raster image data having a predetermined number of rasters following the raster image data lastly read within the acquired image data, and means for concatenating the image data read before the temporary stop and the image data read after the temporary stop on the basis of the detected raster image data and the raster image data lastly read.

In the present invention as configured above, no mark data is employed. That is, when the empty capacity of the buffer is smaller than the predetermined amount, the scanning device temporarily stops reading the image data, and notifies the host computer of the information capable of designating the raster position of the raster image data lastly read and stored in the buffer. And the scanning device restarts reading the image data by overlapping the raster image data lastly read when the empty capacity of the buffer is larger than the predetermined amount owing to the temporary stop.

On the other hand, in acquiring the image data stored in the buffer, the host computer acquires the raster position information indicating a temporary stop position of reading the image data from the scanning device, designates the raster image data lastly read at the time of the temporary stop indicated by the raster position information from the acquired image data, and detects the raster image data most similar to the raster image data lastly read for a detection object of the raster image data having a predetermined number of rasters following the raster image data lastly read within the acquired image data. And the host computer concatenates the image data read before the temporary stop and the image data read after the temporary stop on the basis of the detected raster image data and the raster image data lastly read.

In this manner, with the present invention, in performing the start/stop operation for reading the image data in accordance with the capacity of buffer, the scanning device restarts reading the image data by overlapping the raster image data lastly read at the time of temporary stop, while the host computer designates the raster image data lastly read by employing the information capable of designating the raster position of the raster image data lastly read at the time of temporary stop notified by the scanning device, detects the raster image data matched with the raster image data lastly read, and concatenates the image data before temporary stop and the image data after temporary stop, whereby the image data can be read at high accuracy with a simple structure.

Preferably, the host computer of the present invention further determines whether or not the neighborhood of the raster image data lastly read at the time of temporary stop is the uniform image data, and concatenates the raster image data without detection, when the neighborhood of the raster image data lastly read is the uniform image data. Thereby, the processing load can be relieved when there is no need for concatenating the image data fully.

Also, preferably, the host computer of the present invention calculates a weighted average of the raster image data to be concatenated, the raster image data to concatenate and the following raster image data having a predetermined number of rasters in accordance with a separation degree of raster, and rewrites the raster image data to concatenate and the following raster image data having a predetermined number of rasters on the basis of its calculation result. Thereby, the image data can be smoothly concatenated by using the signal processing.

The present invention provides a scanning device for reading image data, storing the image data in a unit of raster in a buffer and transferring the image data to a host computer. The scanning device has means for temporarily stopping reading the image data when an empty capacity of the buffer is smaller than a predetermined amount, means for restarting reading the image data by overlapping the raster image data lastly read at the time of the temporary stop when the empty capacity of the buffer is larger than the predetermined amount, means for detecting the raster image data most similar to the raster image data lastly read for a detection object of the raster image data having a predetermined number of rasters following the raster image data lastly read in response to the restart, and means for concatenating the image data read before the temporary stop and the image data read after the temporary stop in accordance with the detected raster image data and the raster image data lastly read.

In the present invention as configured above, all can be realized by the scanning device. That is, when the empty capacity of the buffer becomes smaller than the predetermined amount, the scanning device temporarily stops reading the image data. In this case, it is managed where the raster image data lastly read is stored in the buffer in accordance with a normal buffer format control. And the scanning device restarts reading the image data by overlapping the raster image data lastly read at the time of the temporary stop when the empty capacity of the buffer becomes larger than the predetermined amount.

Then, the scanning device detects the raster image data most similar to the raster image data lastly read for a detection object of the raster image data having a predetermined number of rasters following the raster image data lastly read in response to the restart of reading the image data. And the scanning device concatenates the image data read before the temporary stop and the image data read after the temporary stop in accordance with the detected raster image data and the raster image data lastly read.

In this manner, with the present invention, in performing the start/stop operation for reading the image data in accordance with the capacity of buffer, the scanning device restarts reading the image data by overlapping the raster image data lastly read at the time of temporary stop, detects the raster image data matched with the raster image data lastly read, and concatenates the image data before temporary stop and the image data after temporary stop, whereby the image data can be read at high accuracy with a simple constitution.

Preferably, the scanning device of the present invention further determines whether or not the neighborhood of the raster image data lastly read at the time of temporary stop is the uniform image data. And, the raster image data is concatenated without detection, when the neighborhood of the raster image data lastly read is the uniform image data. Thereby, the processing load can be relieved when there is no need for concatenating the raster image data fully.

Also, preferably, the host computer of the present invention calculates a weighted average of the raster image data to be concatenated, the raster image data to concatenate and the following raster image data having a predetermined number of rasters in accordance with a separation degree of raster, and rewrites the raster image data to concatenate and the following raster image data having a predetermined number of rasters on the basis of its calculation result. Thereby, the image data can be smoothly concatenated by using the signal processing.

Brief Description of Drawings

FIG. 1 is a schematic diagram showing a system structure of an image reading system to which the present invention is applied.
FIG. 2 is one embodiment of structure provided for a scanning device.
FIG. 3 is one embodiment of structure provided for a host computer.
FIG. 4 is one embodiment of a flowchart of a process performed by the scanning device.
FIG. 5 is one embodiment of a flowchart of a process performed by the host computer.
FIG. 6 is one embodiment of a flowchart of a process performed by the host computer.
FIG. 7 is an explanatory diagram of image data stored in a ring buffer.
FIG. 8 is an explanatory diagram of a detection process for reference raster image data.

FIG. 9 is an explanatory diagram of a weighted average process for raster image data.

FIG. 10 is another embodiment of the present invention.

FIG. 11 is another embodiment of the present invention.

FIG. 12 is an explanatory diagram of a circuit structure of differential sum calculating means.

FIG. 13 is an explanatory diagram of a process of inflection point detecting means.

FIG. 14 is another embodiment of a flowchart of a process performed by the scanning device.

Best Mode for Carrying Out the Invention

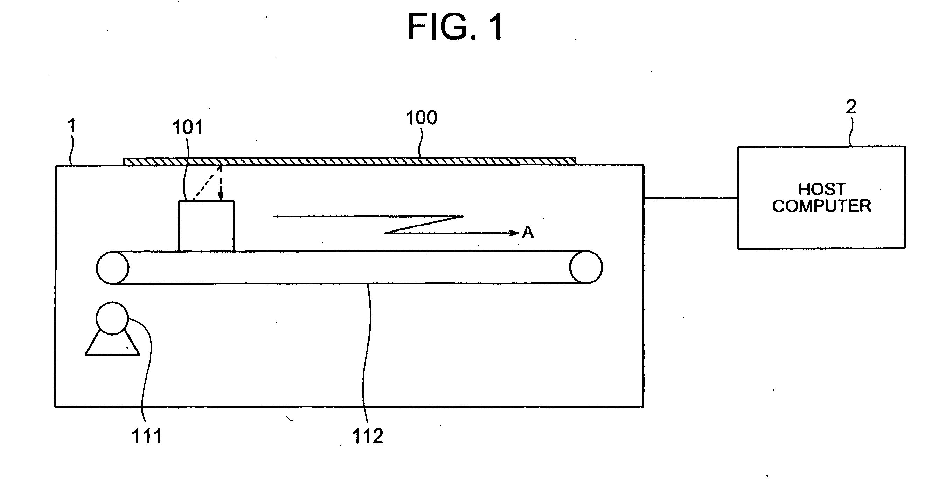

FIG. 1 schematically shows a system structure of an image reading system to which the present invention is applied.

The image reading system of the present invention is composed of a scanning device 1 and a host apparatus (host computer) 2. The scanning device 1 reads the image data drawn on a manuscript 100 through an optical unit 101, stores it in a unit of raster in a buffer and transmits it to a host computer 2. In this case, the scanning device 1 controls the optical unit 101 or the start and stop of a carrier, as indicated by an arrow A. That is, the scanning device 1 temporarily stops reading the image data, when the empty capacity of buffer is smaller than a predetermined amount, and in response to the temporary stop, restarts reading the image data, when the empty capacity of buffer is greater than the predetermined amount.

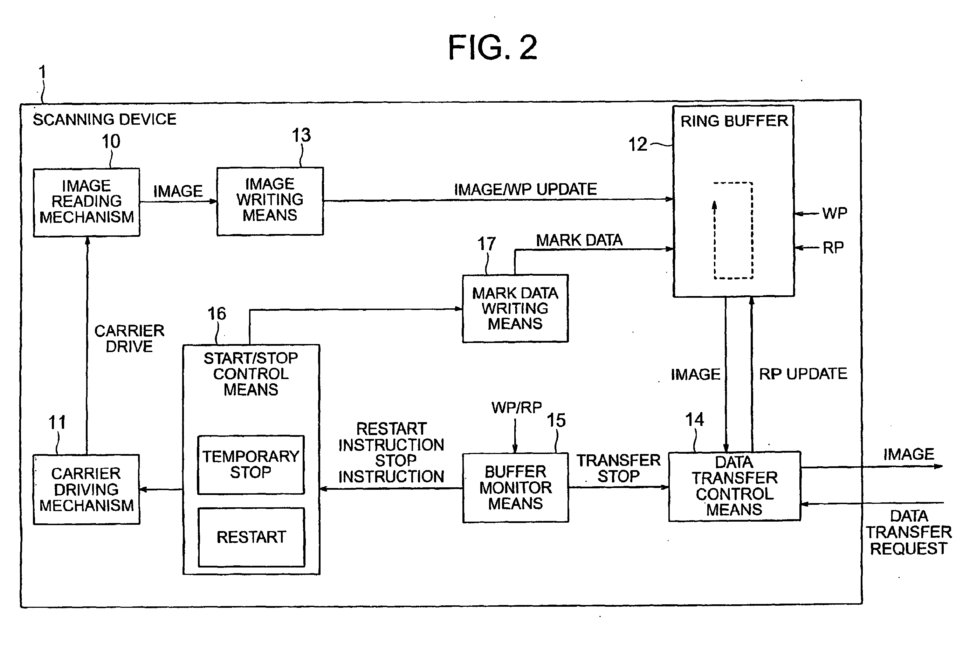

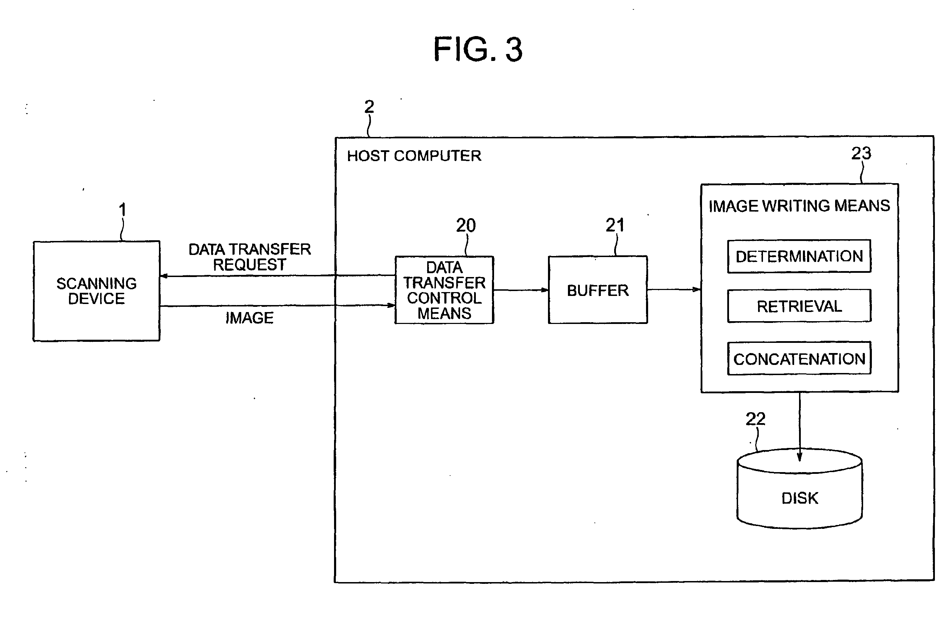

FIG. 2 is one embodiment of structure provided for the scanning device 1, and FIG. 3 is one embodiment of structure provided for a host computer 2.

In the scanning device 1 as shown in FIG. 2, an image reading unit 10 reads image data of the manuscript 100 laid on a manuscript plane by moving the carrier (not shown) mounting a read head. The carrier comprises the optical unit 101 represented in FIG. 1. A carrier drive unit 11 controls the movement of the carrier, comprising a motor 111 and a belt 112. A ring buffer 12 temporarily stores the image data read by the image reading unit 10. Image writing unit 13 writes the image data read by the image reading unit 10 into the ring buffer 12, and updates a write pointer WP pointing to a storage location in synchronism with its writing. Data transfer control unit 14 reads the image data stored in the ring buffer 12 and sends it to the host computer 2 in response to a data transfer request from the host computer 2, and synchronously with the reading, updates a read pointer RP pointing to a read location. Buffer monitor unit 15 monitors the write pointer WP and the read pointer RP to monitor the capacity of empty area in the ring buffer 12, and issues an instruction of start and stop control (temporary stop control and restart control of reading the image data) in response. Start and stop control unit 16 performs the start and stop control by controlling the carrier drive unit 11 in response to a start and stop control instruction issued by the buffer monitor unit 15. Mark data writing unit 17 writes the specified mark data in a write area (at a raster position pointed to by the raster pointer WP) of the image data for the ring buffer 12, when the start and stop control unit 16 issues a temporary stop instruction of reading the image data.

On the other hand, in the host computer 2 as shown in FIG. 3, data transfer control unit 20 acquires the image data read by the scanning device 11. A buffer 21 temporarily stores the image data acquired by the data transfer control unit 20. A disk (hard disk) 22 stores the image data acquired by the data transfer control unit 20. Image writing unit 23 writes the image data stored in the buffer 21 into the disk 22.

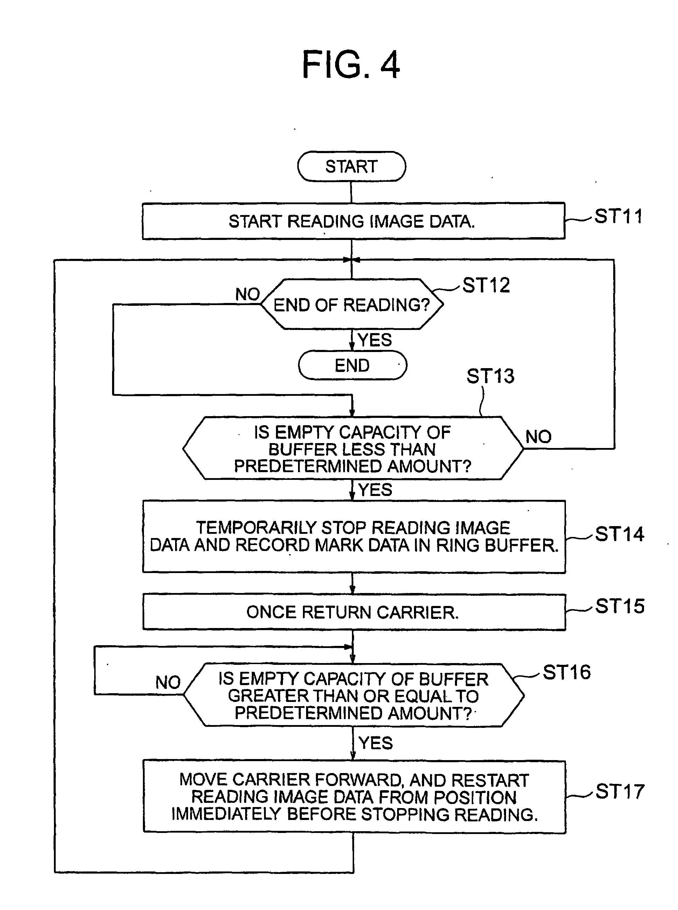

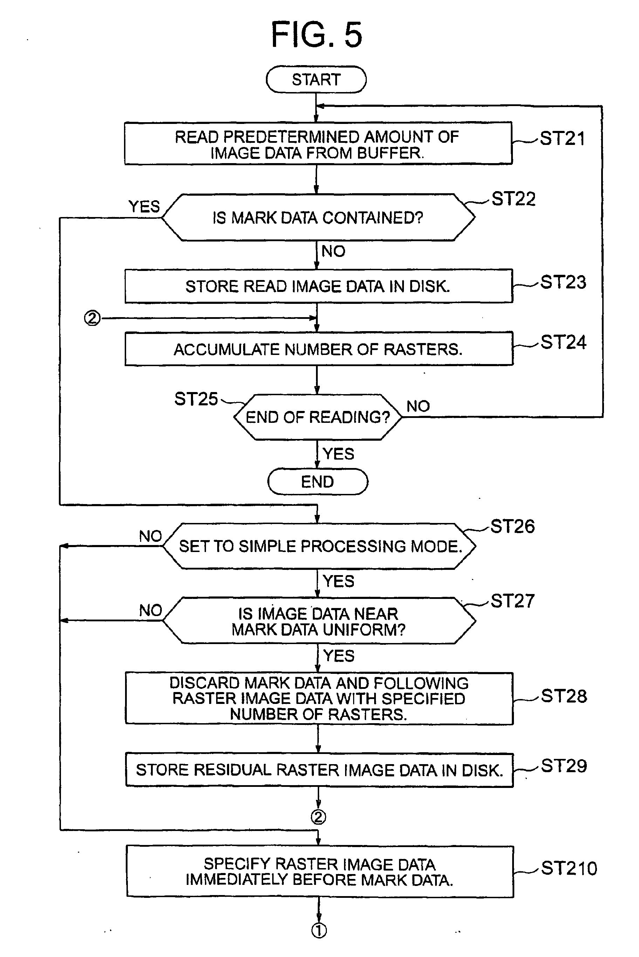

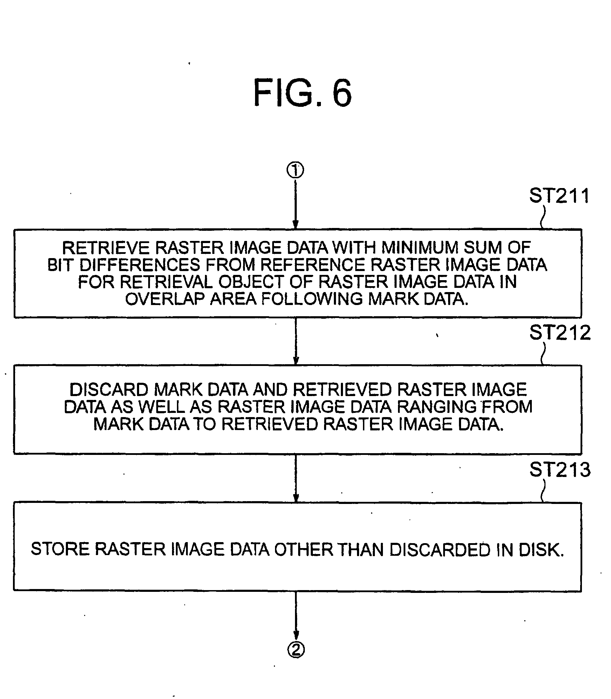

Referring to the flowcharts of FIGS. 4 to 6, the operation of the present invention will be described below in detail. FIG. 4 is one embodiment of a flowchart of a process performed by the scanning device 1, and FIGS. 5 and 6 are one embodiment of flowcharts of a process performed by the image writing unit 23 provided for the host computer 2.

Referring to the flowchart of FIG. 4, firstly, the process performed by the scanning device 1 will be described below.

If a read request of image data is issued, first of all, the scanning device 1 starts to read the image data at step ST11, and then determines whether or not reading the image data is ended at step ST12.

If reading the image data is not ended, the scanning device 1 goes to step ST13 to determine whether or not the capacity of empty area in the ring buffer 12 is less than a predetermined amount by monitoring a write pointer WP and a read pointer RP. That is, the capacity of empty area in the ring buffer 12 is decreased, when the data receiving rate (boost speed) of the host computer 2 is slower than the reading speed of image data, whereby the scanning device 1 monitors it.

If the capacity of empty area in the ring buffer 12 is not less than the predetermined amount at step ST13 for determination, the scanning device 1 returns to step ST12 to continue reading the image data.

On the other hand, if the capacity of empty area in the ring buffer 12 is less than the predetermined amount at step ST13 for determination, the scanning device 1 proceeds to step ST14, where the carrier is once stopped to stop reading the image data and record the specified mark data (taking no value as the image data) in the ring buffer 12.

Subsequently, the scanning device 1 once moves back the carrier by a specified amount at step ST15. Then, at step ST16, the operation waits for the capacity of empty area in the ring buffer 12 to be greater than or equal to a predetermined amount by monitoring the write pointer WP and the read pointer RP. That is, when the image data stored in the ring buffer 12 is transmitted to the host computer 2, the capacity of empty area in the ring buffer 12 is increased, whereby the scanning device 1 waits for it.

At step ST16 for determination, if the capacity of empty area in the ring buffer 12 is greater than or equal to the predetermined amount, the scanning device 1 proceeds to step ST17, where the carrier is moved forward, and reading the image data is restarted from a position immediately before a position at which reading is stopped previously. Then, the operation returns to step ST12. That is, reading the image data is restarted to overlap the image data. In this case, the size of overlap area is set so that the image data lastly read at the stop of reading is read again in view of the mechanical positional accuracy. For example, when the mechanical positional accuracy is ±2 raster, reading the image data is restarted from at least 2 rasters before.

And, if reading the image data is completed at step ST12, the scanning device 1 ends the process.

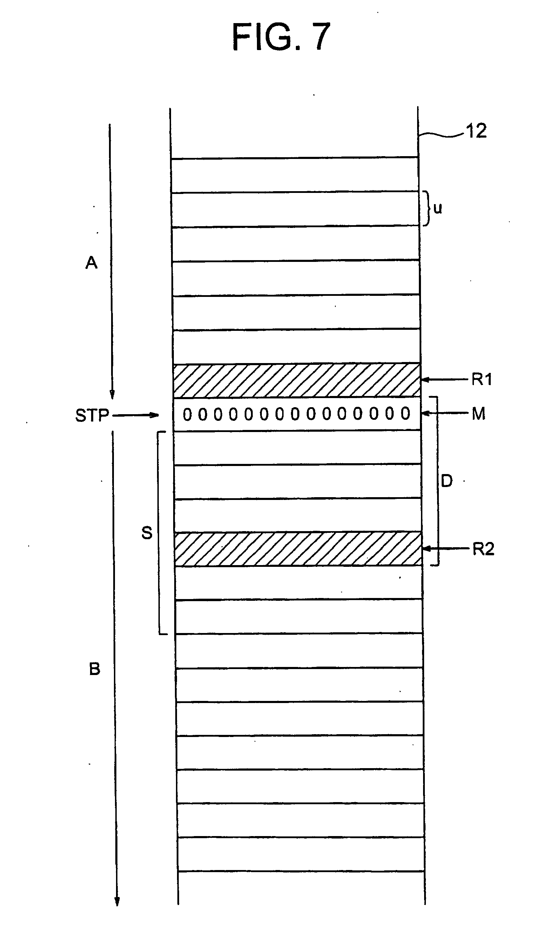

In this manner, if a read request of image data is issued, the scanning device 1 stores the read image data in a unit of raster U in the ring buffer 12, as shown in FIG. 7. Also, the scanning device 1 stops reading the image data at a position one raster before the position STP, when the capacity of empty area in the ring buffer 12 is less than the predetermined amount, and records the specified mark data M after the raster image data R1 (hereinafter referred to as reference raster image data R1) lastly read at the time of stop. An area A up to one raster before the position STP stores the image data read before stop, and an area B one raster after the position STP stores the image data read after restarting the reading.

Herein, the mark data M may be any data as far as it does not take the values of image data (other than the values of the image data). In case of reading the monochromatic image data, it is possible to employ the mark data of all "00" for one line, when there is no image data of all "00" for one line, or it is possible to employ the mark data of all "FF" for one line, when there is no image data of all "FF" for one line, or it is possible to employ the mark data of a repetition of "00" and "FF" for one line, when there is no image data of a repetition of "00" and "FF" for one line. Also, in case of reading the color image data, it is possible to employ the mark data that is defined in such a format that one red line is "00", one green line is "AA" and one blue line is "FF" and that does not exist as the image data.

Referring to the flowcharts of FIGS. 5 and 6, a process performed by the image writing unit 23 provided for the host computer 2 will be described below.

The image writing unit 23 provided for the host computer 2, first of all, reads the predetermined amount of image data from the buffer 21 in the order from the initial position at step ST21, if the image data read by the scanning device 1 is sequentially stored in the buffer 21 by the data transfer control unit 20.

Subsequently, the image writing unit 23 determines whether or not the mark data M is contained in the read image data at step ST22. If the mark data is not contained, the image writing unit 23 goes to step ST23, where the read image data is stored in the disk 22.

Subsequently, the image writing unit 23 adds the number of rasters for the image data stored in the disk 22 this time to the accumulated number of rasters at step ST24, whereby the number of rasters for the image data stored in the disk 22 is updated.

As described above, the scanning device 1 reads the image data to be overlapped in performing the start and stop control. From this, the host computer 2 requests and receives the image data having the number of rasters above that for the intrinsic image data. Thus, the image writing unit 23 deletes the overlapped image data and stores the image data in the disk 22 in accordance with a procedure as will be described later, and calculates the cumulative number of rasters for the image data stored in the disk 22 to determine whether or not the reading of the image data is ended.

Subsequently, the image writing unit 23 determines whether or not the reading of the image data is ended from the cumulative number of rasters at step ST25. If the reading of the image data is ended, the image writing unit 23 ends the process. If the reading of the image data is not ended, the image writing unit 23 returns to step ST21 to continue reading the image data from the buffer 21.

On the other hand, if the mark data M is contained in the image data read from the buffer 21 at step ST22, the image writing unit 23 goes to step ST26, where it is determined whether or not a simple processing mode is set up. The simple processing mode is the mode in which the steps ST210 to 213 to be described later may be omitted when the image data near the mark data M is uniform.

In this determination processing, when the simple processing mode is set up, the image writing unit 23 proceeds to step ST27, where it is determined whether or not the image data near the mark data M is uniform image data without any changes in the density or color. This determination is made by calculating the differential value between adjacent bits of the image data and checking whether or not all the differential values fall within the specified range. Herein, when the mark data M is located at an end portion of the predetermined amount of image data read from the buffer 21, an adjacent portion of the image data is read from the buffer 21.

In the determination processing at step ST27, when the image data near the mark data M is uniform, the image writing unit 23 does not perform the steps ST210 to ST213 to be described later, but proceeds to step ST28 to discard the mark data M and the following raster image data with specified number of rasters, and stores the remaining raster image data in the disk 22 at step ST29. Then the scanning device returns to step ST24.

That is, when the image data near the mark data M is uniform, the steps ST210 to ST213 to be described later are not performed, because the concatenated part of image data (concatenated part between image data read before temporary stop and image data read after restart) is not clear.

The reason for discarding the raster image data with a specified number of rasters is that in restarting after temporary stop, the raster image data is read to be overlapped, whereby the raster image data by an overlapped amount is discarded. However, this processing has no significant effect on the quality of read image data, and may be omitted.

On the other hand, when the simple processing mode at step ST26 is not set up and when the simple processing mode at step ST27 is set up but the image data near the mark data M is not uniform, the image writing unit 23 goes to step ST210 to specify the raster image data (reference raster image data R1 as shown in FIG. 7) immediately before the mark data M. This reference raster image data R1 is the raster image data lastly read at the time of temporarily stopping reading the image data.

Subsequently, the image writing unit 23 detects the raster image data with the minimum sum of bit differences from the reference raster image data R1 for a detection object S of raster image data in an overlap area following the mark data M (raster image data within a detection range S as shown in FIG. 7) at step ST211. Thereby, the image writing unit 23 detects the reference raster image data R2 contained in the image data read by restarting the reading.

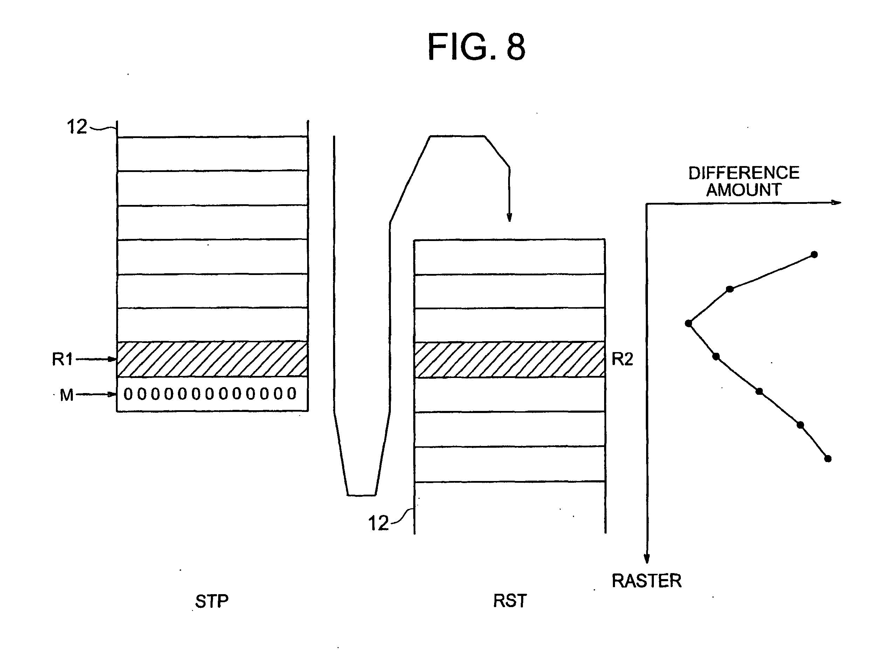

That is, the image writing unit 23 restarts reading the image data to be overlapped, as shown in FIG. 8. In FIG. 8, an area STP indicates the image data read before stop, and an area RST indicates the image data read after restarting the reading. The reference raster image data R2 is contained in the image data (of the area RST) read by restarting the reading. Thus, the image writing unit 23 detects the raster image data so that the sum of bit differences from the reference raster image data R1 (of the area STP) is minimized. Thereby, the (reference) raster image data R2 contained in the image data read by restarting the reading is detected.

Subsequently, the image writing unit 23 discards the mark data M and the detected raster image data R2 as well as the raster image data (i.e., raster image data in area D) ranging from the mark data M to the detected raster image data R2 as shown in FIG. 7 at step ST212. The image writing unit 23 stores the raster image data other than discarded in the disk 21 at step ST213. Then, the operation returns to step ST24.

In this manner, the image writing unit 23 provided for the host computer 2 checks whether or not the mark data M is recorded for the image data stored in the buffer 21 as the processing object, if the image data read by the scanning device 1 is stored in the buffer 21. And when the mark data M is recorded, the image writing unit 23 detects the image data corresponding to the raster image data immediately before the mark data M (reference raster image data R2) from the raster image data in the overlap area following the mark data M, correspondingly concatenates the image data read before temporary stop and the image data read after temporary stop at high accuracy, and stores it in the disk 22.

Herein, supposing that the reference raster image data R1 is a concatenated side and the raster image data next to the detected raster image data R2 is a concatenating side in the flowcharts of FIGS. 5 and 6, the image data read before temporary stop and the image data read after temporary stop are concatenated. However, alternatively, supposing that the raster image data immediately before the reference raster image data R1 is a concatenated side and the detected raster image data R2 is a concatenating side, the image data read before temporary stop and the image data read after temporary stop may be concatenated.

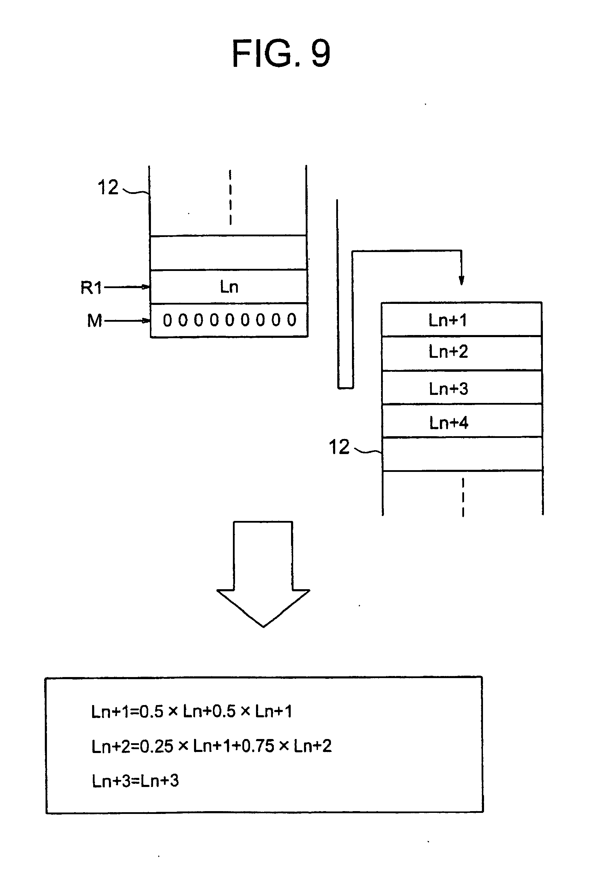

The following processing may be made as shown in FIG. 9. That is, the image data in the overlap area is discarded, and the weighted average for the raster image data (Ln in the drawing) on the concatenated side and the raster image data (Ln+1, Ln+2 in the drawing) on the concatenating side is calculated in accordance with the degree of separation of raster.

$$Ln+1 = 0.5{\times}Ln+0.5{\times}Ln+1$$

$$Ln+2 = 0.25{\times}Ln+1+0.75{\times}Ln+2$$

$$Ln+3 = Ln+3$$

And the raster image data on the concatenating side may be rewritten in accordance with its calculation result.

Through this signal processing, the image data read before temporary stop and the image data after temporary stop can be concatenated smoothly.

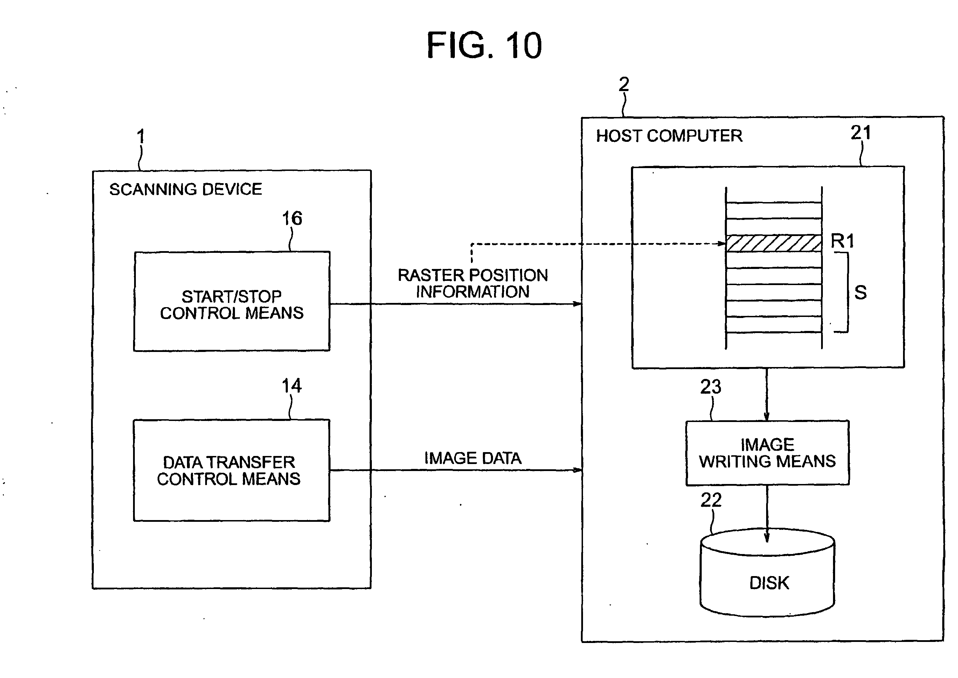

FIG. 10 shows another embodiment of the present invention. In FIG. 10, start/stop control unit 16 provided for the scanning device 1 notifies the predetermined raster position information to the host computer 2 without recording the mark data M. This predetermined raster position information specifies the raster position of reference raster image data R1 lastly read at the time of temporary stop, and may be the raster position information of reference raster image data R1 or the raster position information of the next raster image data, for example.

This notification is made at the time of temporary stop. However, the time of notification is not limited to it, but may take place when a transfer request for the image data is received from the host computer 2 after temporary stop.

On the other hand, the image writing unit 23 provided for the host computer 2 is notified of the raster position information of the raster reference image data to add the number of rasters for the raster image data received from the scanning device 1. Thereby, it is possible to know which is the raster image data (reference raster image data R1) pointed to by the notified raster position information among the raster image data stored in the buffer 21.

Thus, the image writing unit 23 provided for the host computer 2 performs the detection processing in accordance with this embodiment. Thereby, the image writing unit 23 detects the raster image data most similar (R2) to the reference raster image data R1 pointed to by the notified raster position information from the raster image data of the overlap area S following the reference image data R1 pointed to by the notified raster position information, and concatenates the image data read before temporary stop and the image data read after temporary stop in accordance with the detected raster image data R2 and the reference raster image data R1 pointed to by the raster position information, and stores the concatenated image data in the disk 22.

In this manner, it is possible to concatenate the image data read before temporary stop and the image data read after temporary stop at high accuracy in accordance with the embodiment of FIG. 10.

In accordance with the embodiment of FIG. 10, the detection processing that is employed when the image data near the reference raster image data R1 is uniform may be omitted, or the signal processing for the raster image data as shown in FIG. 9 may be performed.

This embodiment of the present invention comprising the scanning device 1 and the host computer 2 has been described above.

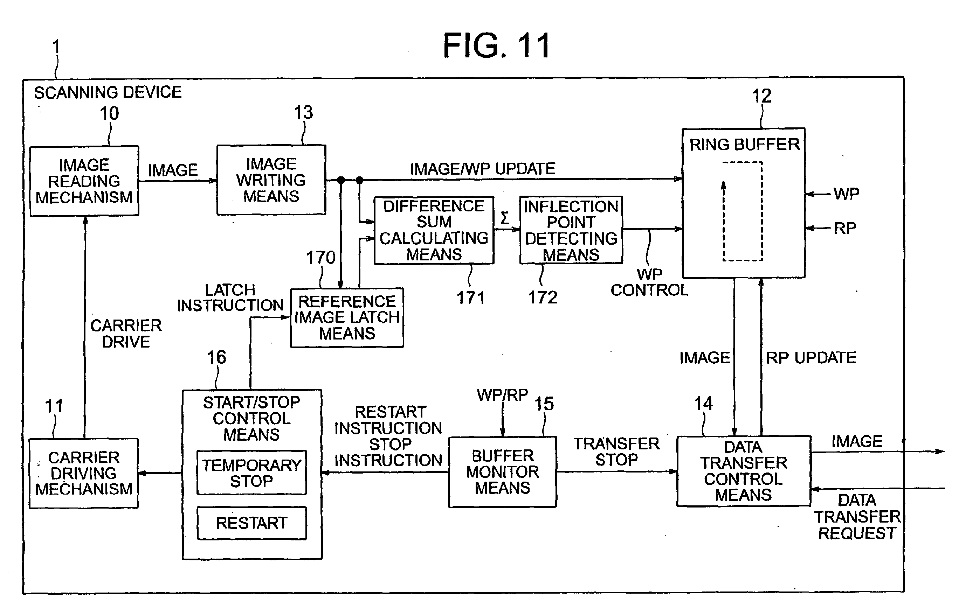

FIG. 11 shows another embodiment of the present invention comprising the scanning device 1 alone. Herein, the same or like parts are denoted by the same numerals as in FIG. 2.

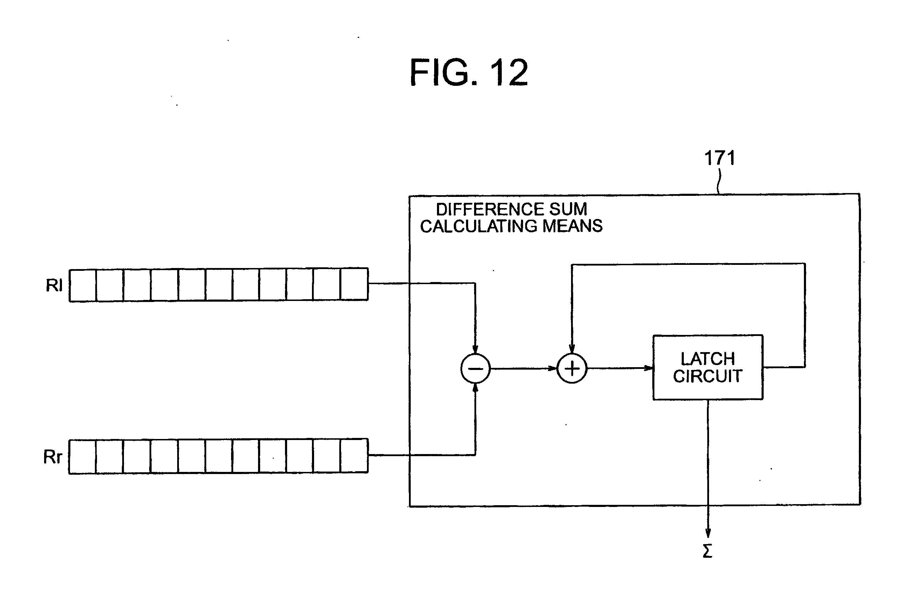

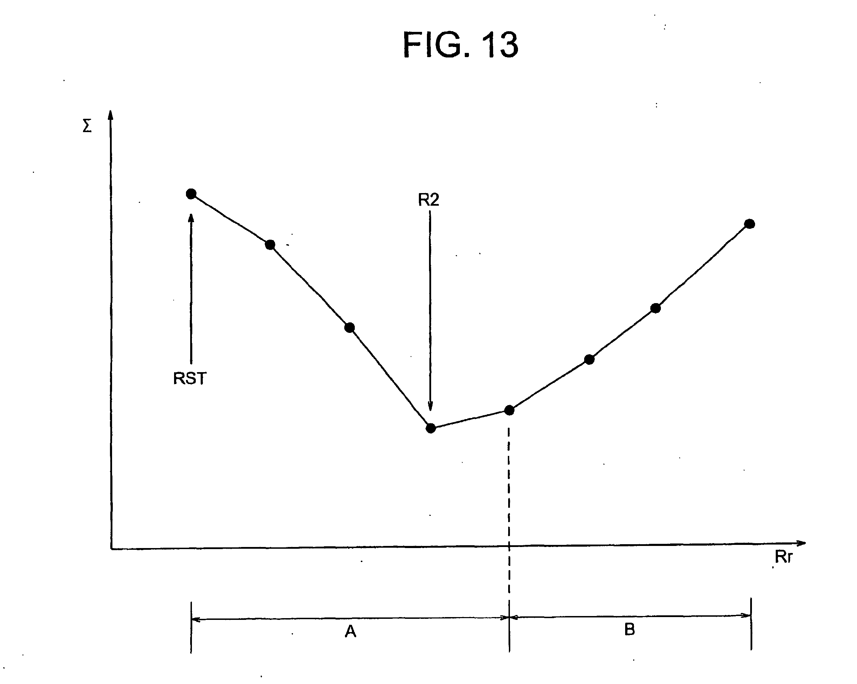

Reference image latch unit 170 latches the raster image data (reference raster image data R1) lastly read at the time of temporarily stopping reading the image data in response to a latch instruction issued by the start/stop control unit 16. Difference sum calculating unit 171 calculates the sum $\Sigma$ of bit difference between the reference raster image data R1 latched by the reference image raster unit 170 and the raster image data Rr read by restarting the reading after temporary stop with a circuit structure as shown in FIG. 12. Inflection point detecting unit 172 controls the raster image data following the RST to suspend updating the write pointer WP for the ring buffer 12, at the time of restarting reading the image data, as shown in FIG. 13. That is, the write pointer WP is not advanced in an area A. At the same time, the inflection point detecting unit 172 controls the write pointer WP to be canceled from a stopped state of update, when the bit difference sum $\Sigma$ calculated by the difference sum calculating unit 171 transits from decrease to increase. That is, the write pointer WP is advanced in an area B. The raster image data in case of transiting to increase is the raster image data next to the reference raster image data (R2) read again.

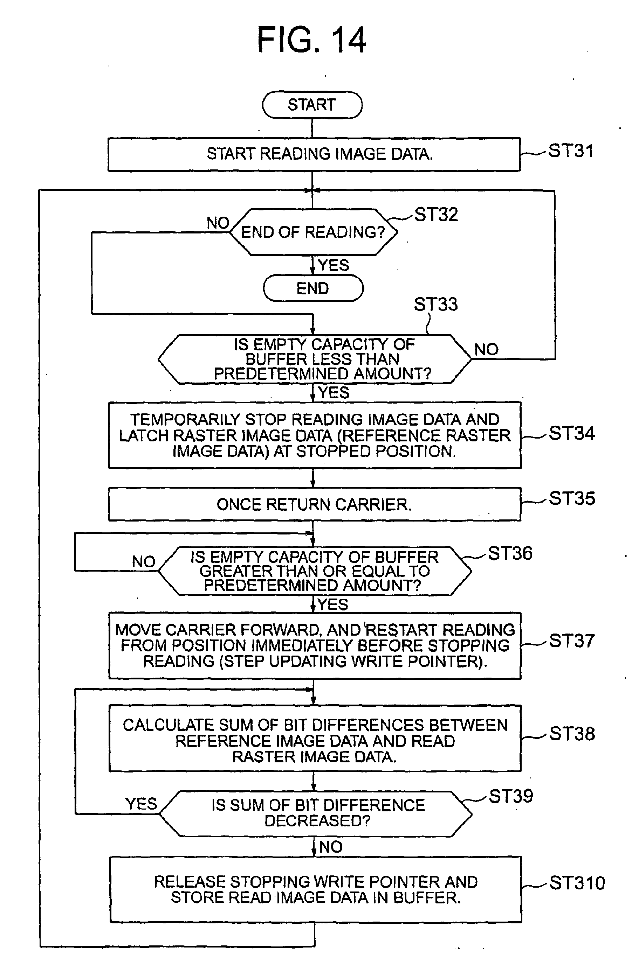

Next, referring to a flowchart of FIG. 14, the operation of this embodiment will be described below in detail. FIG. 14 shows one embodiment of the flowchart of the operation performed by the scanning device 1 in accordance with this embodiment.

If there is issued a read request for the image data, the scanning device 1 first of all starts reading the image data at step ST31, and then determines whether or not reading the image data is ended at step ST32.

If the reading of the image data is not ended, the scanning device 1 goes to step ST33 to determine whether or not the capacity of empty area in the ring buffer 12 is less than a predetermined amount by monitoring the write pointer WP and the read pointer RP for the read buffer 12. In this determination processing, if the capacity of empty area in the ring buffer 12 is not less than the predetermined amount, the scanning device 1 returns to step ST32 to continue reading the image data.

On the other hand, in this determination processing, if the capacity of empty area in the ring buffer 12 is less than the predetermined amount, the scanning device 1 proceeds to step ST34 to stop the movement of the carrier and stop reading the image data (update of the write pointer WP is automatically stopped once) and latch the lastly read reference raster image data R1 in the reference image latch unit 170.

Subsequently, the scanning device 1 moves backward the carrier by specified amount at step ST35, and then waits for the capacity of empty area in the ring buffer 12 to be a predetermined amount or more by monitoring the write pointer WP and the read pointer RP at step ST36.

In the determination processing at step ST36, if the capacity of empty area in the ring buffer 12 is the predetermined amount or more, the scanning device 1 proceeds to step ST37 to move forward the carrier and restart reading the image data from a position immediately before stopping the reading. In this case, the inflection point detecting unit 172 controls the write pointer WP for the ring buffer 12 not to be updated, whereby the read raster image data is overwritten in the entry area pointed to by the write pointer WP.

Subsequently, the scanning device 1 calculates the sum of bit differences between the raster image data to be processed and the reference raster image data R1 latched by the reference image latch unit 170 to process the raster image data sequentially read after restarting the reading, employing the difference sum calculating unit 171 at step ST38. The scanning device 1 determines whether or not the bit difference sum calculated by the difference sum calculating unit 171 continues to decrease, employing the inflection point detecting unit 172 at step ST39.

In this determination processing, if the bit difference sum calculated by the difference sum calculating unit 171 continues to decrease, the scanning device 1 returns to step ST38. Thereby, the sum of bit differences between the raster image data to be processed next and the reference raster image data R1 can be calculated while update of the write pointer WP for the ring buffer 12 is suspended.

On the other hand, in this determination processing, if the bit difference sum calculated by the difference sum calculating unit 171 transits to increase, the scanning device 1 proceeds to step ST310 to cancel the suspended update of the write pointer WP, employing the inflection point detecting unit 172. Transiting to increase takes place at the time of detecting that the raster image data next to the raster image data (R2) that is most similar to the reference raster image data R1 latched by the reference image latch unit 170 is read. Thereby, the scanning device 1 stores the read raster image data in the ring buffer 12 without overwriting, and returns to step ST32.

And the scanning device 1 ends the process if the reading of the image data is ended at step ST32.

In this manner, the scanning device 1 restarts reading the image data to overlap the reference raster image data R1 lastly read at the time of temporary stop in making the start/stop operation for reading the image data in accordance with a buffer capacity, discards the raster image data (image data in an area D) until the raster image data next to the raster image data R2 most similar to the reference raster image data R1 lastly read is read and concatenates the image data before temporary stop and the image data after temporary stop. Thereby, it is possible to read the image data at high accuracy with a simple structure.

In the embodiment of FIG. 14, the raster image data matched with the raster image data lastly read is detected with a hardware by detecting the rater image data next to the raster image data R2 matched with the reference raster image data R1 lastly read. However, besides, the raster image data R2 matched with the reference raster image data R1 lastly read may be detected with software. In this case, the image data before temporary stop and the image data after temporary stop are concatenated by employing a buffer prepared apart from the ring buffer 12.

In accordance with the embodiment of FIG. 14, the detection processing employed when the image data near the reference raster image data R1 is uniform may be omitted, or the signal processing for the raster image data as shown in FIG. 9 may be performed.

Industrial Applicability

As above described, with the present invention, in performing the start/stop operation for reading the image data in accordance with the capacity of buffer, the scanning device restarts reading the image data by overlapping the raster image data lastly read at the time of temporary stop, detects the raster image data matched with the raster image data lastly read, and concatenates the image data before temporary stop and the image data after temporary stop, whereby the image data can be read at high accuracy with a simple structure.

**Claims**

1. A scanning device for reading image data, storing the image data in a unit of raster in a buffer and transferring the image data to a host computer, the scanning device comprising:

   means for temporarily stopping reading the image data when an empty capacity of the buffer becomes smaller than a predetermined amount;
   means for writing specified mark data in a next storage line of raster image data lastly read and stored in the buffer in response to the temporary stop; and
   means for restarting reading the image data by overlapping the raster image data lastly read when the empty capacity of the buffer becomes larger than the predetermined amount.

2. A host computer connected to a scanning device for acquiring image data read by the scanning device in a unit of raster, the host computer comprising:

   means for determining whether or not acquired raster image data are specified mark data indicating a temporary stop of reading the image data;
   means for detecting raster image data most similar to the raster image data immediately before the mark data for a detection object of the raster image data having a predetermined number of rasters following the mark data within the acquired image data; and
   means for concatenating the image data read before the temporary stop and the image data read after the temporary stop on the basis of the detected raster image data and the raster image data immediately before the mark data.

3. A host computer according to claim 2, further comprising:

   means for determining whether or not the neighborhood of the raster image data immediately before the mark data is uniform image data,

   wherein the image data is concatenated without detection, when the neighborhood of the raster image data immediately before the mark data is the uniform image data.

4. A host computer according to claim 2, further comprising:

> means for calculating a weighted average of the raster image data to be concatenated, the raster image data to concatenate and the following raster image data having a predetermined number of rasters in accordance with a separation degree of raster, and for rewriting the raster image data to concatenate and the following raster image data of the predetermined number of rasters on the basis of its calculation result.

5. A host computer according to claim 2, wherein the raster image data most similar to the raster image data immediately before the mark data has a minimum sum of bit differences from the raster image data immediately before the mark data.

6. A scanning device for reading image data, storing the image data in a unit of raster in a buffer and transferring the image data to a host computer, the scanning device comprising:

> means for temporarily stopping reading the image data when an empty capacity of the buffer becomes smaller than a predetermined amount;
> means for notifying the host computer of information capable of designating a raster position of raster image data lastly read and stored in the buffer in response to the temporary stop; and
> means for restarting reading the image data by overlapping the raster image data lastly read when the empty capacity of the buffer becomes larger than the predetermined amount.

7. A scanning device according to claim 6, wherein the information capable of designating the raster position of the raster image data lastly read is raster position information of the raster image data lastly read or the raster position information of the next raster image data.

8. A host computer connected to a scanning device for acquiring image data read by the scanning device in a unit of raster, the host computer comprising:

> means for acquiring raster position information indicating a temporary stop position of reading the image data from the scanning device;
> means for designating raster image data lastly read at the time of the temporary stop indicated by the raster position information from the acquired image data;
means for detecting the raster image data most similar to the raster image data lastly read for a detection object of the raster image data having a predetermined number of rasters following the raster image data lastly read within the acquired image data; and
means for concatenating the image data read before the temporary stop and the image data read after the temporary stop on the basis of the detected raster image data and the raster image data lastly read.

9. A host computer according to claim 8, further comprising:

> means for determining whether or not the neighborhood of the raster image data lastly read is uniform image data,

> wherein the image data is concatenated without detection, when the neighborhood of the raster image data lastly read is the uniform image data.

10. A host computer according to claim 8, further comprising:

> means for calculating a weighted average of the raster image data to be concatenated, the raster image data to concatenate and the following raster image data having a predetermined number of rasters in accordance with a separation degree of raster, and for rewriting the raster image data to concatenate and the following raster image data having a predetermined number of rasters on the basis of its calculation result.

11. A host computer according to claim 8, wherein the raster image data most similar to the raster image data lastly read has a minimum sum of bit differences from the raster image data lastly read.

12. A scanning device for reading image data, storing the image data in a unit of raster in a buffer and transferring the image data to a host computer, the scanning device comprising:

> means for temporarily stopping reading the image data when an empty capacity of the buffer becomes smaller than a predetermined amount;
> means for restarting reading the image data by overlapping the raster image data lastly read at the time of the temporary stop when the empty capacity of the buffer becomes larger than the predetermined amount;

means for detecting the raster image data most similar to the raster image data lastly read for a detection object of the raster image data having a predetermined number of rasters following the raster image data lastly read in response to the restart; and
means for concatenating the image data read before the temporary stop and the image data read after the temporary stop in accordance with the detected raster image data and the raster image data lastly read.

13. A scanning device according to claim 12, further comprising:

means for determining whether or not the neighborhood of the raster image data lastly read is uniform image data,

wherein the image data is concatenated without detection, when the neighborhood of the raster image data lastly read is the uniform image data.

14. A scanning device according to claim 12, further comprising:

means for calculating a weighted average of the raster image data to be concatenated, the raster image data to concatenate and the following raster image data having a predetermined number of rasters in accordance with a separation degree of raster, and for rewriting the raster image data to concatenate and the following raster image data having a predetermined number of rasters on the basis of its calculation result.

15. A scanning device according to claim 12, wherein the raster image data most similar to the raster image data lastly read has a minimum sum of bit differences from the raster image data lastly read.

# FIG. 1

EP 1 435 726 A1

# FIG. 2

SCANNING DEVICE (1)

- IMAGE READING MECHANISM (10)
- IMAGE WRITING MEANS (13)
- RING BUFFER (12) — WP, RP
- IMAGE/WP UPDATE
- MARK DATA
- MARK DATA WRITING MEANS (17)
- START/STOP CONTROL MEANS (16): TEMPORARY STOP, RESTART
- CARRIER DRIVE
- CARRIER DRIVING MECHANISM (11)
- RESTART INSTRUCTION / STOP INSTRUCTION
- BUFFER MONITOR MEANS (15) — WP/RP
- TRANSFER STOP
- IMAGE / RP UPDATE
- DATA TRANSFER CONTROL MEANS (14)
- IMAGE
- DATA TRANSFER REQUEST

EP 1 435 726 A1

# FIG. 3

SCANNING DEVICE — 1

DATA TRANSFER REQUEST

IMAGE

HOST COMPUTER — 2

DATA TRANSFER CONTROL MEANS — 20

BUFFER — 21

IMAGE WRITING MEANS — 23

DETERMINATION

RETRIEVAL

CONCATENATION

DISK — 22

EP 1 435 726 A1

# FIG. 4

```
                    ┌─────────┐
                    │  START  │
                    └────┬────┘
                         ▼
    ┌──────────────────────────────────────┐
    │     START READING IMAGE DATA.        │──── ST11
    └──────────────────┬───────────────────┘
                       ▼
    NO          ╱───────────────╲   ST12
    ◄───────────┤ END OF READING? │
                ╲───────────────╱
                       │ YES
                       ▼
                   ┌───────┐
                   │  END  │      ST13
                   └───────┘
                       ▼
            ╱─────────────────────────╲
            │    IS EMPTY CAPACITY OF  │    NO
            │      BUFFER LESS THAN    │────────►
            │  PREDETERMINED AMOUNT?   │
            ╲─────────────────────────╱
                       │ YES
                       ▼
    ┌──────────────────────────────────────┐
    │   TEMPORARILY STOP READING IMAGE     │──── ST14
    │ DATA AND RECORD MARK DATA IN RING BUFFER. │
    └──────────────────┬───────────────────┘
                       ▼
    ┌──────────────────────────────────────┐
    │        ONCE RETURN CARRIER.          │──── ST15
    └──────────────────┬───────────────────┘
                       ▼
    NO      ╱─────────────────────────────╲   ST16
    ◄───────┤  IS EMPTY CAPACITY OF BUFFER │
            │   GREATER THAN OR EQUAL TO   │
            │   PREDETERMINED AMOUNT?      │
            ╲─────────────────────────────╱
                       │ YES
                       ▼
    ┌──────────────────────────────────────┐
    │  MOVE CARRIER FORWARD, AND RESTART    │──── ST17
    │  READING IMAGE DATA FROM POSITION     │
    │ IMMEDIATELY BEFORE STOPPING READING.  │
    └───────────────────────────────────────┘
```

EP 1 435 726 A1

# FIG. 5

START

READ PREDETERMINED AMOUNT OF IMAGE DATA FROM BUFFER. — ST21

IS MARK DATA CONTAINED? — ST22
YES
NO

STORE READ IMAGE DATA IN DISK. — ST23

② → ACCUMULATE NUMBER OF RASTERS. — ST24

ST25 — END OF READING? — NO

YES

END

SET TO SIMPLE PROCESSING MODE. — ST26
NO
YES

IS IMAGE DATA NEAR MARK DATA UNIFORM? — ST27
NO
YES

DISCARD MARK DATA AND FOLLOWING RASTER IMAGE DATA WITH SPECIFIED NUMBER OF RASTERS. — ST28

STORE RESIDUAL RASTER IMAGE DATA IN DISK. — ST29

②

SPECIFY RASTER IMAGE DATA IMMEDIATELY BEFORE MARK DATA. — ST210

①

16

# FIG. 6

①

ST211

RETRIEVE RASTER IMAGE DATA WITH MINIMUM SUM OF
BIT DIFFERENCES FROM REFERENCE RASTER IMAGE DATA
FOR RETRIEVAL OBJECT OF RASTER IMAGE DATA IN
OVERLAP AREA FOLLOWING MARK DATA.

ST212

DISCARD MARK DATA AND RETRIEVED RASTER IMAGE
DATA AS WELL AS RASTER IMAGE DATA RANGING FROM
MARK DATA TO RETRIEVED RASTER IMAGE DATA.

ST213

STORE RASTER IMAGE DATA OTHER THAN DISCARDED IN DISK.

②

# FIG. 7

# FIG. 8

EP 1 435 726 A1

# FIG. 9

12 —

R1 → Ln

M → 0 0 0 0 0 0 0 0 0

Ln+1
Ln+2
Ln+3
Ln+4

12 —

Ln+1 = 0.5 × Ln + 0.5 × Ln+1

Ln+2 = 0.25 × Ln+1 + 0.75 × Ln+2

Ln+3 = Ln+3

# FIG. 10

SCANNING DEVICE 1

START/STOP CONTROL MEANS 16

DATA TRANSFER CONTROL MEANS 14

RASTER POSITION INFORMATION

IMAGE DATA

HOST COMPUTER 2

21

R1

S

23

IMAGE WRITING MEANS

22

DISK

EP 1 435 726 A1

# FIG. 11

EP 1 435 726 A1

# FIG. 12

171

DIFFERENCE SUM
CALCULATING MEANS

LATCH
CIRCUIT

Σ

Rl

Rr

FIG. 13

# FIG. 14

```
                    ( START )
                         │
┌────────────────────────────────────────────┐
│       START READING IMAGE DATA.             │──── ST31
└────────────────────────────────────────────┘
                         │
   ┌─────────────────────┼──────────────────────────┐
   │            NO ╱  END OF READING? ╲──── ST32      │
   │        ┌──────╲                  ╱               │
   │        │       ╲────────────────╱                │
   │        │              │ YES                       │
   │        │           ( END )                        │
   │        │                           ST33           │
   │        │        ╱─────────────────────╲           │
   │        │  NO   ╱  IS EMPTY CAPACITY OF  ╲          │
   │        │◄──────   BUFFER LESS THAN                 │
   │        │       ╲ PREDETERMINED AMOUNT? ╱           │
   │        │        ╲─────────────────────╱            │
   │        │              │ YES                        │
   │  ┌─────────────────────────────────────────────┐  │
   │  │ TEMPORARILY STOP READING IMAGE DATA AND      │  │
   │  │ LATCH RASTER IMAGE DATA (REFERENCE RASTER    │──ST34
   │  │ IMAGE DATA) AT STOPPED POSITION.             │  │
   │  └─────────────────────────────────────────────┘  │
   │              │                                     │
   │  ┌─────────────────────────────────────────────┐  │
   │  │         ONCE RETURN CARRIER.                 │──ST35
   │  └─────────────────────────────────────────────┘  │
   │              │                                     │
   │        ╱─────────────────────────────╲            │
   │  NO   ╱  IS EMPTY CAPACITY OF BUFFER   ╲───ST36    │
   │◄──────   GREATER THAN OR EQUAL TO                  │
   │        ╲ PREDETERMINED AMOUNT?         ╱           │
   │         ╲─────────────────────────────╱           │
   │              │ YES                                 │
   │  ┌─────────────────────────────────────────────┐  │
   │  │ MOVE CARRIER FORWARD, AND RESTART READING    │  │
   │  │ FROM POSITION IMMEDIATELY BEFORE STOPPING    │──ST37
   │  │ READING (STEP UPDATING WRITE POINTER).       │  │
   │  └─────────────────────────────────────────────┘  │
   │              │                                     │
   │  ┌─────────────────────────────────────────────┐  │
   │  │ CALCULATE SUM OF BIT DIFFERENCES BETWEEN     │  │
   │  │ REFERENCE IMAGE DATA AND READ                │──ST38
   │  │ RASTER IMAGE DATA.                           │  │
   │  └─────────────────────────────────────────────┘  │
   │              │                                     │
   │       ╱─────────────────────────────╲             │
   │ YES  ╱  IS SUM OF BIT DIFFERENCE      ╲───ST39     │
   │◄─────   DECREASED?                                 │
   │       ╲─────────────────────────────╱             │
   │              │ NO                                  │
   │  ┌─────────────────────────────────────────────┐  │
   │  │ RELEASE STOPPING WRITE POINTER AND           │──ST310
   │  │ STORE READ IMAGE DATA IN BUFFER.             │  │
   │  └─────────────────────────────────────────────┘  │
   │              │                                     │
   └──────────────┴─────────────────────────────────────┘
```

## INTERNATIONAL SEARCH REPORT

| | International application No. |
|---|---|
| | PCT/JP02/10521 |

A. CLASSIFICATION OF SUBJECT MATTER
Int.Cl⁷ H04N1/04, G06T1/60

According to International Patent Classification (IPC) or to both national classification and IPC

B. FIELDS SEARCHED

Minimum documentation searched (classification system followed by classification symbols)
Int.Cl⁷ H04N1/04-1/207, H04N1/21, G06T1/00, G06T1/60

Documentation searched other than minimum documentation to the extent that such documents are included in the fields searched
| | | | |
|---|---|---|---|
| Jitsuyo Shinan Koho | 1926-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | US 5818979 A (Fujitsu Ltd.),<br>06 October, 1998 (06.10.98),<br>Column 3, lines 1 to 33; Fig. 1<br>& JP 6-121120 A | 6-7<br>1-5,8-15 |
| Y<br>A | US 4712139 A (Canon Kabushiki Kaisha),<br>08 December, 1987 (08.12.87),<br>Column 7, line 22 to column 9, line 50;<br>Figs. 8 to 10<br>& JP 60-154770 A | 6-7<br>1-5,8-15 |
| A | US 4809086 A (Tokyo Electric Co., Ltd.),<br>28 February, 1989 (28.02.89),<br>Full text<br>& JP 64-64463 A | 2-5,8-15 |

☐ Further documents are listed in the continuation of Box C.  ☐ See patent family annex.

| | |
|---|---|
| *    Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br>    10 January, 2003 (10.01.03) | Date of mailing of the international search report<br>    28 January, 2003 (28.01.03) |
| Name and mailing address of the ISA/<br>    Japanese Patent Office | Authorized officer |
| Facsimile No. | Telephone No. |

Form PCT/ISA/210 (second sheet) (July 1998)